# NEW EUROPEAN PATENT SPECIFICATION

(11) **EP 0 614 828 B2**
(45) Date of publication and mention of the opposition decision: **02.05.2002**
(45) Mention of the grant of the patent: 17.06.1998
(21) Application number: 94200553.9
(22) Date of filing: 04.03.1994
(51) Int. Cl.: B65D 90/58, F16K 3/02

(54) **Slide valve for material in powder or small-piece form**
Schiebeventil für Material in Pulverform oder in Form von kleinen Teilen
Vanne à tiroir pour matières en poudre ou sous forme de petites pièces

(30) Priority: 08.03.1993 IT RE930015 U
(43) Date of publication of application: 14.09.1994
(73) Proprietor: WAM S.p.A., I-41030 Cavezzo (Modena) (IT)
(72) Inventor: Marchesini, Vainer, I-41030 Cavezzo (Modena) (IT)
(74) Representative: Gotra, Stefano

(56) References cited:
- EP-A- 0 092 008
- DE-B- 1 456 601
- DE-C- 2 431 649
- DE-C- 2 902 430
- FR-A- 1 317 186
- FR-A- 2 640 598
- GB-A- 2 071 813
- US-A- 5 046 432

## Description

This invention relates to a slide valve for material in powder or small-piece form.

A typical application of the valve in object is on the lower surface of silos or below a hopper for intercepting the descent of the material.

In particular the invention relates to a valve comprising, in combination: a rigid frame with vertical walls defining a passage mouth for the material, having two straight lateral walls parallel one to the other; a flat horizontal plate, defining a valving member to close the passage mouth, horizontally movable through a slot provided in a wall, said plate sliding along said lateral walls, the width of the plate being equal to the distance between the lateral walls; an elastomeric material gasket means in a form of a closed ring fixed to the frame and extending along the upper peripheral edge of the passage mouth, said gasket means comprising, when viewed in section, a lip which projects downward toward the interior of the mouth in contact with the upper surface of the plate, the outer surface of the lip converging downwardly toward the center of the passage mouth, over the upper edge surface of the plate.

A technical problem connected with such valves is to prevent the material seeping beyond the valving member when this is in its closure position and to also prevent the material seeping through the passage slot for the valving member when this is at rest and is then pulled rearwards. This problem is exacerbated by the fact that said valves are generally of relatively very large dimensions (the mouth usually has dimensions exceeding 15 cm x 15 cm) and therefore require robust components formed by structural steel working, their parts in addition generally operating in the presence of material which can be very abrasive.

FR-A-2640598 discloses a valve of the above type. The peculiar structure of the valve shown in FR-A-2640598 is such that in the region of the passage mouth the valving member, namely the horizontal plate, is not supported by anything but the lower gasket means. So, when the mouth is relatively very large, as in the case the valve is put under big silos, and the powder material is relatively heavy, then the horizontal plate is subjected to a relatively high weight which is opposed only by the gasket means. So the gasket means, being made of an elastomeric material, will be compressed and the horizontal plate will unavoidably sink in the vertical direction, and the powder material will seep out, so the main function of the valve is lacking.

An object of the present invention is therefore to solve said technical problem within the framework of an operationally reliable solution which is constructionally simple and economical.

The above mentioned object and further objects are attained by the present invention as characterised in the claims, wherein the horizontal plate is supported by idle means which are pivotably fixed to the lateral walls and which act against the lower edge surface of the plate, so that any vertical sinking of the plate relatively to the passage mouth is prevented.

The invention is described in detail hereinafter with the aid of the accompanying figures, which illustrate one embodiment thereof.
Figure 1 is a perspective view of the valve.
Figure 2 is a section on the vertical plane II-II of Figure 1.
Figure 3 is a section on the vertical plane III-III of Figure 1.
Figure 4 is a plan view of an embodiment of the valve different from the preceding of Figure 1.
Figure 5 is a plan view of a further embodiment of the valve different from the preceding.
Figure 6 is a section on the plane VI-VI of Figure 5.
Figure 7 is a sectional view similar to Figure 2, showing a further embodiment of the invention.

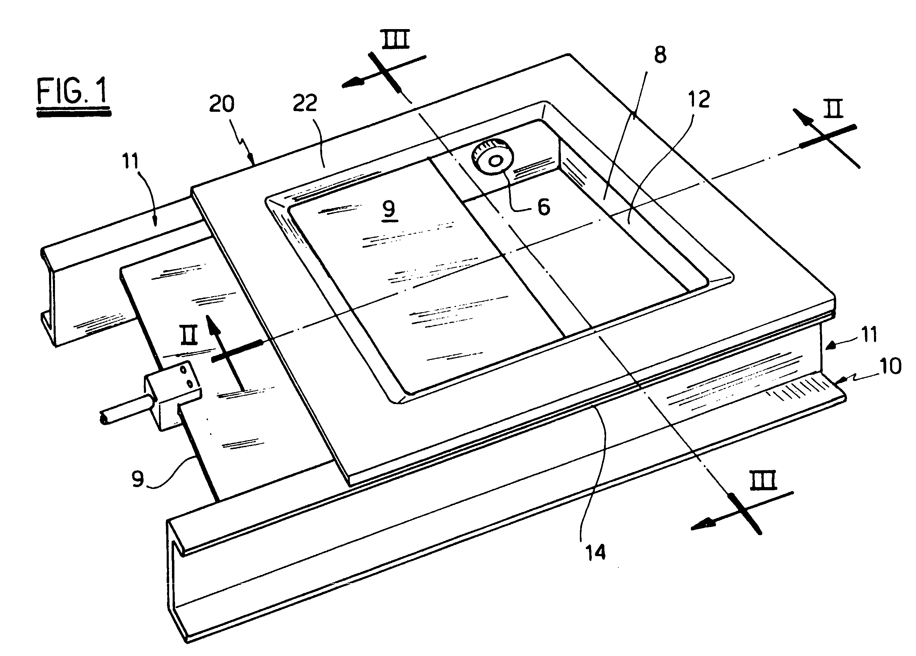

The valve shown in Figures 1-3 comprises a rigid frame 10, in particular of metal, comprising four section bars of C cross-section arranged to define a square or rectangle. Each of the section bars 11 comprises a vertical wall 12. The four vertical walls 12 define a prismatic mouth 8 for passage of the material.

One of the walls 12, indicated by 12a, possesses a horizontally extending slot 13 through which a valving member 9 in the form of a horizontal flat plate passes with horizontal movement. The valving member 9 is of such a size as to close the passage mouth 8 when viewed in plan. Specifically, the width of the valving member 9 is equal, save for a small clearance, to the distance between the two opposing walls 12 along which it slides, whereas the length of the valving member 9 is greater than the distance between the other two walls 12 so that, even when in its closure position, the valving member 9 projects beyond the mouth 8 through the slot 13.

The mouth 8 is closed by pushing the valving member 9 forwards into the mouth 8, opening being achieved vice versa by pulling the valving member 9 rearwards. During said movement, the valving member 9 is guided by idle wheels 6 pivoted to two lateral walls 12 to act against the lower surface of the valving member.

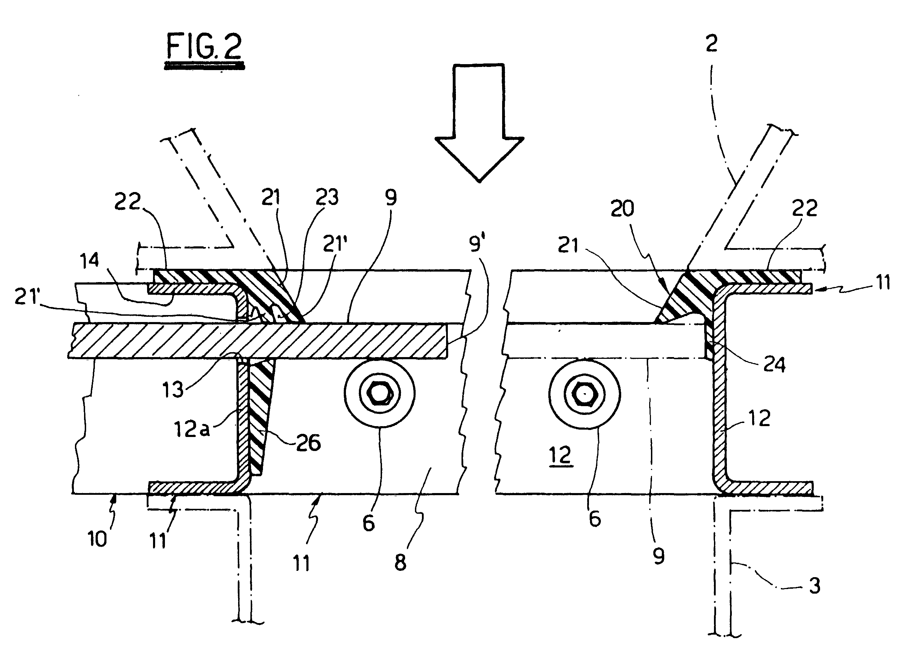

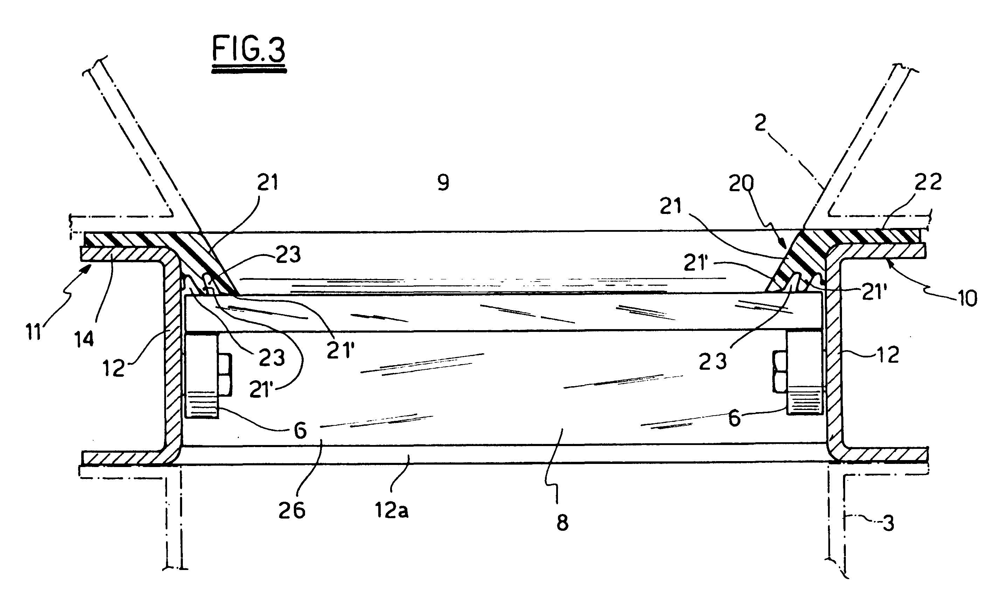

For use, the frame 10 is fixed between an upper convergent surface 2 (for example a hopper or the lower surface of a silo) and a lower transit surface 3 for the material. The material hence descends from the top downwards through the mouth 8 (Figures 2 and 3).

According to the invention, a gasket means 20 of elastomeric material is fixed to the frame 10 to extend in the form of a closed ring along the upper peripheral edge of the mouth 8. The gasket means 20 consequently comprises four sides extending along the four upper sides of the mouth 8.

When viewed in vertical cross-section (Figures 2 and 3), the gasket means 20 comprises a lip 21 which projects downwards towards the interior of the mouth 8.

Said lip 21 extends along the four sides of the upper peripheral edge of the mouth 8, with its outer surface converging downwards.

The lower surface of said lip 21 is in contact with the upper surface of the valving member 9 when this is inserted into the mouth 8.

The gasket means 20 also comprises a horizontal flat rim 22 which is fixed to a corresponding upper horizontal rim 14 of the frame 10, the rim 14 being formed by the upper horizontal flanges of the section bars 11. The lip 21 is joined to the inner edge of the flat rim 22.

The gasket means 20 also comprises, on that wall 12 opposite the wall 12a comprising the slot 13, a substantially vertical appendix 24 which adheres to said wall 12 and projects downwards below the lip 21 so that the front edge 9' of the valving member 9 abuts against said appendix 24 to increase the anti-seepage action.

Along its lower surface, the lip 21 can comprise one or more longitudinal recesses 23 (ie extending parallel to the longitudinal extension of the sides of the mouth 8), to define one or more longitudinal ridges 21' to increase the sealing action of the lip 21 against the valving member.

In the illustrated embodiment, said recesses 23 are provided along three sides of the mouth 8 but not in that part of the lip positioned along that wall 12 opposite the wall 12a.

When in its rest state (ie not in contact with the valving member 9), the lip 21 projects downwards slightly beyond the ideal plane in which the upper surface of the valving member 9 moves. Consequently, when the valving member 9 is inserted into the mouth 8 into contact with the lip 21, this is urged upwards and by reaction presses against the valving member 9 with a certain preload.

Consequently because of its action against the surface of the valving member 9, the lip 21 very effectively stops any seepage when the valving member 9 closes the mouth 8. This action is increased by the fact that the material in powder or small-piece form lying above the valving member 9 presses against the lip 21 to further urge it against the valving member 9. Hence an extremely effective seal is achieved for the mouth 8.

A rectilinear gasket 26 is also provided, fixed to the wall 12a below the valving member 9 and extending along the slot 13. The gasket 26 has an upper lip in contact with the upper surface of the valving member 9. The gasket 26 is also arranged to scrape the lower surface of the valving member 9 when this is pulled rearwards from the mouth 8. Consequently by virtue of the combination of the gasket 26 and the gasket means 20, any seepage through the slot 13 is prevented, both when the valving member 9 is at rest in its opening or closure position, and while it is being pulled rearwards.

The upper surface of the valving member 9 can be of elastomeric material, said elastomer having a greater hardness than the elastomer of the gasket means 20. In this manner a surface can be obtained having excellent abrasion resistance while being sufficiently slidable when in contact with the lip 21.

Advantageously, the gasket means 20 can be formed by moulding the elastomeric material in the fluid state onto the frame 10. Both good adhesion to the frame 10 and high constructional accuracy are achieved.

For ease of description, the valve of the invention has been described and claimed with reference to the most usual spatial arrangement, ie that in which the valving member 9 lies horizontally and the material to be intercepted lies above the valve.

The valve can however be of a different spatial arrangement, for example it can be variously rotated from the illustrated position.

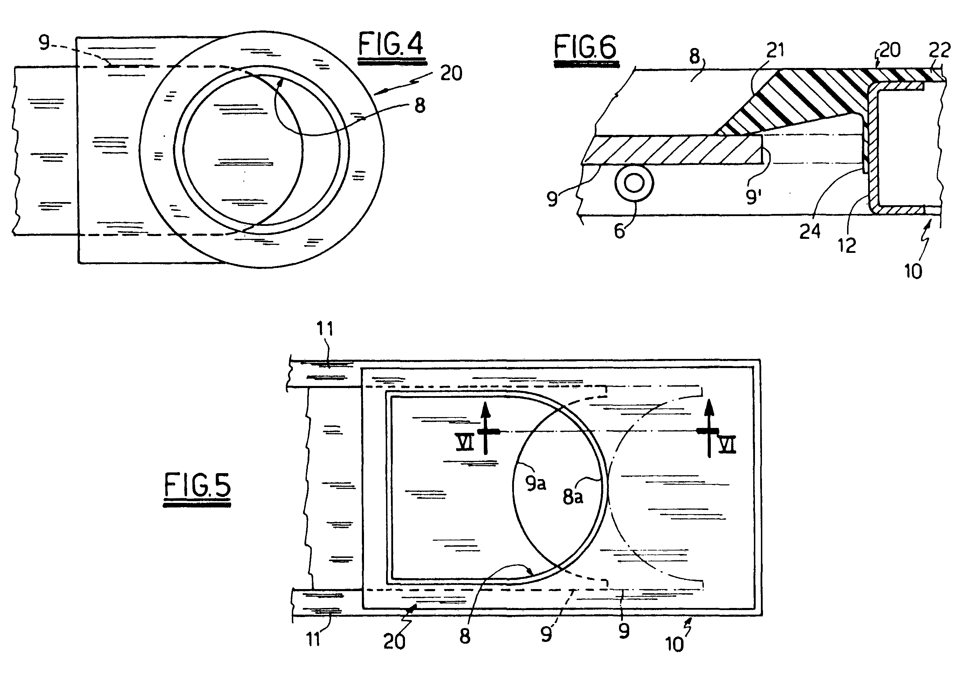

The embodiments shown in Figures 4, 5 and 6 differ from that heretofore illustrated in that the plan shape of the passage mouth 8 and valving member 9 are different from that illustrated heretofore.

In Figure 4, the mouth 8 has a usual circular shape and the valving member 9 has a known rectangular plan shape with its front portion in the form of a semicircle.

The embodiment shown in Figure 5 is new in that the mouth 8 has a convex arched side 8a opposite the side comprising the passage slot. The front side of the valving member 9 is of concave arched shape.

This embodiment facilitates the descent of the material, particularly when the valve is close to closure, by preventing "bridges" and other obstructions which easily occur when the material passes through a long narrow slot.

Figure 6 is a section showing the shape assumed in this type of valve by the gasket means 20 according to the invention, positioned on the side 8a.

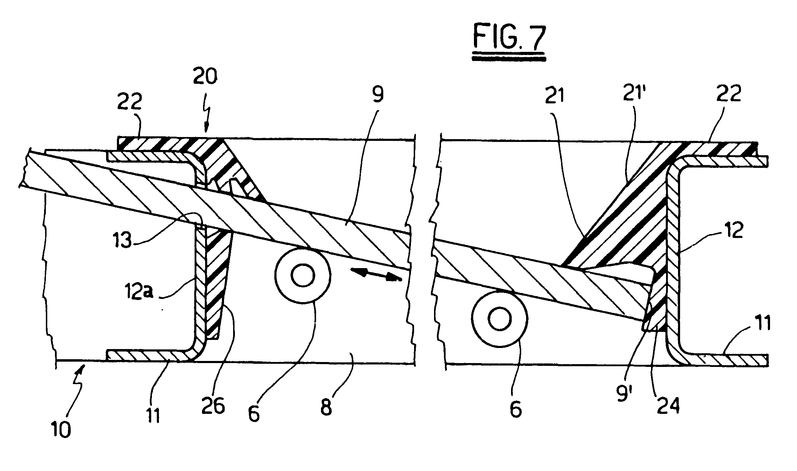

In a further embodiment, shown in Figure 7, the frame 10 lies in a substantially horizontal plane, whereas the valving member 9 slides in a plane inclined to the horizontal, the inclination being directed downwards towards that wall 12 opposite the wall 12a (comprising the slot 13). The lip 21 has its upper surface 21' inclined downwards towards the centre of the passage mouth 8.

The inclination of the valving member 9 together with that of the surface 21' facilitate descent of the material when the valving member is semi-closed, and in particular when close to closure.

This embodiment can be applied to any of the valve types shown in Figures 1, 4 and 5.

Numerous modifications of a practical and applicational nature can be made to the invention, but without leaving the scope of the inventive idea as hereinafter claimed.

## Claims

1. A slide valve for material in powder or small-piece form, comprising, in combination:
- a rigid frame (10) with vertical walls (12) defining a passage mouth (8) for the material, having two straight lateral walls (12) parallel one to the other;
- a flat horizontal plate (9), defining a valving member to close the passage mouth, horizontally movable through a slot (13) provided in a wall (12a), sliding along said lateral walls (12), the width of the plate (9) being equal to the distance between the lateral walls (12), during said movement the plate being guided by idle wheels (6) pivotably fixed to the lateral walls (12), each idle wheel (6) being rotatable around its axis, the idle wheels (6) acting against the lower edge surface of the plate (9);
- an elastomeric material gasket means (20) in the form of a closed ring fixed to the frame (10) and extending along the upper peripheral edge of the passage mouth (8), said gasket means comprising, when viewed in section, a lip (21) which projects downwards towards the interior of the mouth (8) in contact with the upper surface of the plate (9), the outer surface of the lip (21) converging downwardly toward the center of the passage mouth, over the upper edge surface of the plate (9), in a closure position the plate (9) being inserted into the mouth (8) into contact with the lip (21) and this being urged upwards and by reaction pressing against the plate (9) with a certain preload;
**characterised in that**:
- the whole lip (21), in its rest state, projects downwards slightly beyond an ideal plane in which the upper surface of the plate (9) moves;
- in said closure position, the plate (9) is supported by at least the farthest said idle wheels (6) from the wall (12a) carrying said slot (13) and its upper surface is located in the same ideal plane in which the upper surface moves.

2. A valve as claimed in claim 1, **characterised in that** said lip (21) comprises along its lower surface one or more longitudinal recesses (23) to increase the sealing action of the lip (21).

3. A valve as claimed in claim 1, **characterised by** comprising a gasket (26) fixed to a wall (12a) of the frame (10) below the valving member (9) and extending along the slot (13) traversed by this latter, said gasket (26) having an upper lip in contact with the lower surface of the valving member (9) and arranged to scrape said lower surface when the valving member (9) is retracted outwards from the mouth (8).

4. A valve as claimed in claim 1, **characterised in that** said gasket means (20) comprises a horizontal flat rim (22) fixed to a corresponding upper horizontal rim (14) provided in the frame (10), the lip (21) being joined to said flat rim (22).

5. A valve as claimed in claim 1, **characterised in that** the upper surface of the valving member (9) is of elastomeric material of greater hardness than the gasket means (20).

6. A valve as claimed in claim 1, **characterised in that** said gasket means (20) is formed by direct moulding onto the rigid frame (10).

7. A valve as claimed in claim 1, **characterised in that** said gasket means (20) comprises, on that wall (12) opposite the wall (12a) carrying said slot (13), a substantially vertical appendix (24) which adheres to said wall (12) and projects downwards below the lip (21), the front edge (9') of the valving member (9) abutting against said appendix (24).

8. A valve as claimed in claim 1 where said frame (10) lies substantially horizontally, **characterised in that** the valving member (9) lies and slides in a plane inclined downwards from the horizontal towards that wall (12) opposite the wall (12a) carrying said slot (13), the lip (21) of the gasket means (20) having an upper surface (21') inclined downwards towards the centre of the passage mouth (8).

9. A valve as claimed in claim 1, **characterised in that** in plan view the passage mouth (8) comprises a convex arched side (8a) opposite that side comprising the passage slot (13), the valving member (9) having in plan view a front side (9a) of convex arched shape.

## Patentansprüche

1. Schiebeventil für Material in Pulverform oder in Form von kleinen Teilen, enthaltend in einer Kombination:
- einen starren Rahmen (10) mit vertikalen Wänden (12), beschreibend eine Durchlassöffnung (8) für das Material und enthaltend zwei gerade Seitenwände (12), die parallel zueinander verlaufen;
- eine flache horizontale Platte (9), beschreibend ein Ventilteil zum Verschliessen der Durchlassöffnung, die horizontal durch einen in eine Wand (12a) eingearbeiteten Schlitz (13) beweglich ist und entlang den genannten Seitenwänden (12) gleitet, wobei die Breite der Platte (9) die gleiche ist wie der Abstand zwischen den Seitenwänden (12), wobei während der genannten Bewegung die Platte durch leerlaufende Rollen (6) geführt wird, welche drehbar an den Seitenwänden (12) befestigt sind, wobei jede leerlaufende Rolle (6) um ihre Achse drehbar ist, und wobei die leerlaufenden Rollen (6) gegen die untere Kantenfläche der Platte (9) wirken;
- ein Dichtungsmittel (20) aus Elastomermaterial in Form eines geschlossenen, an dem Rahmen (10) befestigten Ringes, welcher sich entlang der oberen umlaufenden Kante der Durchlassöffnung (8) erstreckt, wobei das genannte Dichtungsmittel, wenn man es im Schnitt betrachtet, eine Lippe (21) enthält, die nach unten in Richtung des In-nenraums des Durchlasses (8) hervorsteht und sich mit der oberen Oberfläche der Platte (9) im Kontakt befindet, wobei die äussere Oberfläche der Lippe (21) nach unten zur Mitte der Durchlassöffnung hin konvergiert, und zwar über die obere Kantenfläche der Platte (9), und wobei in einer Schliessposition die Platte (9) in die Durchlassöffnung (8) und im Kontakt mit der Lippe (21) eingesetzt ist und diese nach oben gedrückt und durch Reaktion mit einer gewissen Vorspannung gegen die Platte (9) gepresst wird;
**dadurch gekennzeichnet, dass**
- die gesamte Lippe (21) in ihrer Ruheposition nach unten und leicht über eine ideale Ebene herausragt, auf welcher sich die obere Oberfläche der Platte (9) bewegt;
- in der genannten Schliessposition die Platte (9) wenigstens von den am weitesten von der Wand (12a), welche den genannten Schlitz (13) enthält, entfernt liegenden leerlaufenden Rollen (6) gestützt wird und ihre obere Oberfläche auf der gleichen idealen Ebene angeordnet ist, in welcher sich die obere Oberfläche bewegt.

2. Ein Ventil nach Patentanspruch 1, **dadurch gekennzeichnet, dass** die genannte Lippe (21) entlang ihrer unteren Fläche eine oder mehrere längsverlaufende Vertiefungen (23) enthält, um die Dichtungswirkung der Lippe (23) zu verstärken.

3. Ein Ventil nach Patentanspruch 1, **dadurch gekennzeichnet, dass** es eine an einer Wand (12a) des Rahmens (10) befestigte Dichtung (26) enthält, und zwar unterhalb des Ventilteils (9) und sich entlang dem Schlitz (13) erstreckend, der von letzterem durchlaufen wird, wobei die genannte Dichtung (26) eine obere Lippe im Kontakt mit der unteren Oberfläche des Ventilteils (9) aufweist, angeordnet, um die genannte untere Oberfläche abzustreifen, wenn das Ventilteil (9) nach ausserhalb der Durchlassöffnung (8) zurückgezogen wird.

4. Ein Ventil nach Patentanspruch 1, **dadurch gekennzeichnet, dass** das genannte Dichtungsmittel (20) einen horizontalen flachen Rand (22) aufweist, der an einem entsprechenden oberen horizontalen Rand (14) befestigt ist, welcher in dem Rahmen (10) vorgesehen ist, wobei die Lippe (21) mit dem genannten flachen Rand (22) verbunden ist.

5. Ein Ventil nach Patentanspruch 1, **dadurch gekennzeichnet, dass** die obere Oberfläche des Ventilteils (9) aus einem Elastomermaterial von einer grösseren Härte besteht als die des Dichtungsmittels (20).

6. Ein Ventil nach Patentanspruch 1, **dadurch gekennzeichnet, dass** das genannte Dichtungsmittel (20) durch direktes Anformen an den starren Rahmen (10) gebildet ist.

7. Ein Ventil nach Patentanspruch 1, **dadurch gekennzeichnet, dass** das genannte Dichtungsmittel (20) an der Wand (12), welche der den genannten Schlitz (13) enthaltenden Wand (12a) gegenüberliegt, einen im wesentlichen vertikalen Ansatz (24) enthält, welcher an der genannten Wand (12) anhaftet und sich nach unten bis unterhalb der Lippe (21) erstreckt, wobei die Frontkante (9') des Ventilteils (9) gegen den genannten Ansatz (24) schlägt.

8. Ein Ventil nach Patentanspruch 1, bei welchem der genannte Rahmen (10) im wesentlichen horizontal angeordnet ist, **dadurch gekennzeichnet, dass** das Ventilteil (9) auf einer nach unten geneigten Ebene liegt und gleitet, und zwar von der Horizontalen in Richtung der Wand (12), die der den genannten Schlitz (13) enthaltenden Wand (12a) gegenüberliegt, wobei die Lippe (21) des Dichtungsmittels (20) eine obere Fläche (21') aufweist, die nach unten in Richtung der Mitte der Durchlassöffnung (8) geneigt ist.

9. Ein Ventil nach Patentanspruch 1, **dadurch gekennzeichnet, dass** in der Planansicht die Durchlassöffnung (8) eine konvex gewölbte Seite (8a) aufweist, die der den Schlitz (13) enthaltenden Seite gegenüberliegt, wobei das Ventilteil (9) in der Planansicht eine konvex gewölbte vordere Seite (9a) zeigt.

## Revendications

1. Vanne à tiroir pour matières en poudre ou sous forme de petites pièces, comprenant, en combinaison:
- un châssis rigide (10) avec des parois verticales (12) définissant une ouverture de passage (8) pour la matière, ayant deux parois latérales étroites (12) parallèles l'une à l'autre;
- une plaque plate horizontale (9), définissant un élément de la vanne destiné à fermer l'ouverture de passage, déplaçable horizontalement au travers d'une fente (13) aménagée dans une paroi (12a), coulissant le long desdites parois latérales (12), la largeur de la plaque (9) étant égale à la distance entre les parois latérales (12), la plaque (9) étant guidée pendant ce mouvement par des roulettes (6) fixées de manière à pouvoir pivoter aux parois latérales (12), chaque roulette (6) pivotant autour de son axe et agissant sur la surface inférieure de la plaque (9);
- des moyens de jointure (20) en matériau élastomère sous la forme d'un anneau fermé fixé au châssis (10) et se développant le long du bord périphérique supérieur de l'ouverture de passage (8), lesdits moyens de jointure comprenant, lorsqu'ils sont vus en section, une lèvre (21) saillante vers le bas et vers l'intérieur de l'ouverture (8), et étant en contact avec la surface supérieure de la plaque (9), la surface extérieure de la lèvre (21) convergeant vers le bas vers le centre de l'ouverture de passage, au-dessus de la surface supérieure de la plaque (9), la plaque (9) étant insérée, dans une position fermée, dans l'ouverture (8) en contact avec la lèvre (21), cette dernière étant poussée vers le haut et pressant par réaction contre la plaque (9) avec une certaine force;
**caractérisée en ce que**:
- la lèvre (21), dans sa position de repos, est saillante vers le bas légèrement au-delà d'un plan idéal dans lequel se déplace la surface supérieure de la plaque (9);
- dans ladite position fermée, la plaque (9) est supportée par au moins la roulette (6) la plus éloignée de la paroi (12a) comprenant ladite fente (13) et sa surface supérieure est située dans le même plan idéal dans lequel la surface supérieure se déplace.

2. Une vanne selon la revendication 1, **caractérisée en ce que** ladite lèvre (21) comprend le long de sa surface inférieure une ou plusieurs rainures longitudinales (23) pour accroître l'action d'étanchéité de la lèvre (21).

3. Une vanne selon la revendication 1, **caractérisée en ce qu'**elle comprend un joint (26) fixé à une paroi (12a) du châssis (10) au-dessous de l'élément de la vanne (9) et se développant le long de la fente (13) traversée par celui-ci, ledit joint (26) ayant une lèvre supérieure en contact avec la surface inférieure de l'élément de la vanne (9) et arrangée pour râcler ladite surface inférieure lorsque l'élément de la vanne (9) est rétracté vers l'extérieur de l'ouverture (8).

4. Une vanne selon la revendication 1, **caractérisée en ce que** lesdits moyens de jointure (20) comprennent un bord horizontal plat (22) fixé à un bord horizontal supérieur (14) correspondant présenté par le châssis (10), la lèvre (21) étant jointe audit bord plat (22).

5. Une vanne selon la revendication 1, **caractérisée en ce que** la surface supérieure de l'élément de la vanne (9) est constituée d'un matériau élastomère d'une dureté supérieure à celle des moyens de jointure (20).

6. Une vanne selon la revendication 1, **caractérisée en ce que** lesdits moyens de jointure (20) sont formés par moulage direct dans le châssis rigide (10).

7. Une vanne selon la revendication 1, **caractérisée en ce que** lesdits moyens de jointure (20) comprennent, sur la paroi (12) opposée à la paroi (12a) comportant ladite fente (13), un appendice substanciellement vertical (24) qui adhère à ladite paroi (12) et est saillant vers le bas au-dessous de la lèvre (21), le bord frontal (9') de l'élément de la vanne (9) butant contre ledit appendice (24).

8. Une vanne selon la revendication 1 dans laquelle ledit châssis (10) est disposé substanciellement horizontalement, **caractérisée en ce que** l'élément de la vanne (9) repose et glisse sur un plan incliné vers le bas depuis l'horizontale vers la paroi (12) opposée à la paroi (12a) comportant ladite fente (13), la lèvre (21) des moyens de jointure (20) ayant une surface supérieure (21') inclinée vers le bas vers le centre de l'ouverture de passage (8).

9. Une vanne selon la revendication 1, **caractérisée en ce que** dans la vue de face l'ouverture de passage (8) comprend un côté en forme d'arc convexe (8a) opposé au côté comprenant la fente de passage (13), l'élément de la vanne (9) ayant, dans une vue de face, un côté frontal (9a) ayant la forme d'un arc convexe.
